# EUROPEAN PATENT APPLICATION

(11) **EP 1 304 234 A2**
(43) Date of publication of application: **23.04.2003**
(21) Application number: 02023072.8
(22) Date of filing: 17.10.2002
(51) Int. Cl.: B44B 7/00, B23K 26/03

(54) **Automatic marking of diamond girdles using a laser**

(30) Priority: 17.10.2001 US 329540 P; 02.08.2002 US 209890
(71) Applicant: Danog Properties & Investment Ltd., Ramat Gan 52522 (IL)
(72) Inventor: Benjano, Daniel, Ramat Gan 52282 (IL)
(74) Representative: Modiano, Guido, Dr.-Ing.

(57) **Abstract**

A method of inscribing an indicium on a girdle of a gemstone, by producing a profile of the girdle by performing measurements of the gemstone, determining one or more locations on the girdle to inscribe the indicium by comparing the indicium with the profile and inscribing the indicium on the girdle at one of the locations. Also included is a system configured to perform the above method. The system includes a stage configured for mounting the gemstone thereon. a light detection apparatus, a drive mechanism configured to provide relative movement between the stage and the light detection apparatus. an inscription apparatus and a processor.

## Description

This application claims the benefit of U.S. Provisional Application No. 60/329,540 filed October 17^{th}, 2001

### FIELD AND BACKGROUND OF THE INVENTION

The present invention relates to inscribing an indicium on a girdle of a gemstone and, in particular, it concerns automatic selection of a location for inscribing an indicium on a girdle of a gemstone.

Of most relevance to the present invention are U.S Patent no. 4,392,476 to Gresser et al., U.S Patent no. 5,932,119 Kaplan et al. and U.S. Patent no. 6,187,213 to Smith et al., all of which describe various methods and apparati for placing indicia on the surface of precious stones including diamonds. A shortcoming of the aforementioned systems and methods is due to the need to manually locate the position where the indicium is to be inscribed on the precious stone.

Also of relevance to the present invention is a system called a Megascope, which is commercially available from OGltech Inc of 62w 47th Street, Suite 1606, New York 10036 New York or from OGI Systems Ltd. of 34 Tuval Street, Ramat Gan, Israel. The Megascope is a quick, accurate and detailed diamond proportion analyzer. The Megascope is used by retailers to measure and analyze stones, compile databases, reports and prepare customized certificates. In conjunction with proprietary WINDOWS software, the Megascope accurately measures and characterizes. a vacuum-held round or fancy diamond, in 15 seconds or less. A polished diamond is placed on the stage of the Megascope. A backlight is turned on and a silhouette of the diamond is displayed on a screen. The diamond is rotated by 360 degrees, thereby obtaining a full set of silhouettes. The Megascope analyzes the shape and cut. weight, diameter, crown angle and height, pavilion angle and depth, culet, table size, total depth, girdle thickness and other relevant characteristics. The diamond is characterized relative to stored standards such as those established by the American Gem Society (AGS) or custom preferences entered by the user. Information is displayed on a computer screen. Data is archived for inventory, stock management purposes or other uses. Many types of data formats are extractable and displayable based on the above information, including 3D rotational representation of the diamond and its girdle profile. A user may optionally enter or interface, using other data and/or instruments, into the certificate or report, stone proportion, symmetry, polish, clarity, color, fluorescence and the like. Additionally, multi-channel capabilities and a fixed lens system of the Megascope obviate the need for lens exchanges when measuring stones of various class sizes. The Megascope's software is Microsoft Windows based and is extremely user friendly.

A shortcoming of the aforementioned system is that the Megascope does not have inscription capabilities.

There is therefore a need for an apparatus and method for automatic selection of a location for inscribing an indicium on a girdle of a gemstone.

### SUMMARY OF THE INVENTION

The present invention is a system for automatic selection of a location for inscribing an indicium on a girdle of a gemstone and method of operation thereof.

According to the teachings of the present invention there is provided, a method of inscribing an indicium on a girdle of a gemstone, comprising the steps of: (a) producing a profile of the girdle by performing measurements of the gemstone; (b) determining at least one location on the girdle to inscribe the indicium by comparing the indicium with the profile; and (c) inscribing the indicium on the girdle at one of the at least one location.

According to a further feature of the present invention, there is also provided the step of warning a user that the indicium is too large to fit as a whole unit on the girdle.

According to a further feature of the present invention, there is also provided the step of informing a user of a maximum number of a plurality of characters that fit onto the girdle as a whole unit for a given font size of the characters.

According to a further feature of the present invention, the step of determining further includes determining a best-fit location on the girdle to inscribe the indicium.

According to a further feature of the present invention the step of determining further includes reducing a size of the indicium in order to fit the indicium into the at least one location.

According to a further feature of the present invention the step of determining further includes the step of obtaining permission of a user to reduce the size of the indicium in order to determine the at least one location.

According to a further feature of the present invention the at least one location is chosen such that the indicium is a whole unit within the at least one location.

According to a further feature of the present invention the step of determining is effected by comparing the indicium with the profile to determine at least one location on the girdle to inscribe the indicium, wherein the at least one location is chosen such that a number of divisions of the indicium is minimized.

According to a further feature of the present invention the step of determining further includes choosing the at least one location such that the indicium is divided within the girdle.

According to a further feature of the present invention, the step of determining is effected so as to avoid superimposing the indicium on a prior indicium

According to a further feature of the present invention, there is also provided the step of providing a preview to a user of at least one possible inscription location on the girdle.

According to a further feature of the present invention, there is also provided the step of providing a preview to a user of the indicium as the indicium is to be inscribed on the girdle.

According to a further feature of the present invention, the step of inscribing is effected using a laser.

According to the teachings of the present invention there is also provided a system for inscribing an indicium on to a girdle of a gemstone, comprising: (a) a stage configured for mounting the gemstone thereon; (b) a light detection apparatus; (c) a drive mechanism configured to provide relative movement between the stage and the light detection apparatus; (d) an inscription apparatus; and (e) a processor configured to: (i) operate the light detection apparatus, the stage and the drive mechanism in order to produce a profile of the girdle; (ii) compare the indicium with the profile to determine at least one location on the girdle to inscribe the indicium; and (iii) inscribe the indicium on the girdle, using the inscription apparatus.

According to a further feature of the present invention, the processor is further configured to warn a user that the indicium is too large to fit as a whole unit on the girdle.

According to a further feature of the present invention the processor is further configured to inform a user of a maximum number of a plurality of characters that fit onto the girdle as a whole unit for a given font size of the characters.

According to a further feature of the present invention- the processor is further configured to determine a best-fit location on the girdle to inscribe the indicium.

According to a further feature of the present invention the processor is further configured to reduce a size of the indicium in order to determine the at least one location.

According to a further feature of the present invention the processor is further configured to obtain permission of a user to reduce the size of the indicium in order to determine the at least one location.

According to a further feature of the present invention the at least one location is chosen such that the indicium is a whole unit within the at least one location.

According to a further feature of the present invention, the processor is further configured to minimize a number of divisions of the indicium.

According to a further feature of the present invention the processor is further configured to choose the at least one location such that the indicium is divided within the girdle.

According to a further feature of the present invention the processor is further configured to choose the at least one location to avoid superimposing the indicium on a prior indicium.

According to a further feature of the present invention, there is also provided a display apparatus, wherein the processor is further configured to provide a preview to a user on the display apparatus of at least one possible inscription location on the girdle.

According to a further feature of the present invention, there is also provided a display apparatus, wherein the processor is further configured to provide a preview to a user on the display apparatus of the indicium as the indicium is to be inscribed on the girdle.

According to a further feature of the present invention, the inscription. apparatus includes a laser.

According to the teachings of the present invention there is also provided, a method of inscribing an indicium on a girdle of a gemstone, comprising the steps of: (a) producing a profile of the girdle by performing measurements of the gemstone; (b) positioning an inscription apparatus relative to the girdle by rotating the gemstone and by moving an inscription apparatus rectilinearly; and (c) inscribing the indicium on the girdle.

According to the teachings of the present invention there is also provided a system for inscribing an indicium on to a girdle of a gemstone, comprising: (a) a stage configured for mounting the gemstone thereon; (b) a light detection apparatus; (c) an inscription apparatus; (d) a first drive mechanism configured to rotate the stage; (e) a second drive mechanism configured to rectilinearly move the inscription apparatus; and (f) a processor configured to: (i) operate the light detection apparatus, the stage and the first drive mechanism in order to produce a profile of the girdle; (ii) position the inscription apparatus relative to the girdle, by operating the first drive mechanism and the second drive mechanism to rotate the stage and to rectilinearly move the inscription apparatus, respectively; and (iii) operate the inscription apparatus to inscribe the indicium on the girdle.

### BRIEF DESCRIPTION OF THE DRAWINGS

The invention is herein described, by way of example only, with reference to the accompanying drawings, wherein:
Fig. 1 is a schematic plan view of an inscription system that is constructed and operable in accordance with a preferred embodiment of the invention;
Fig. 2 is a schematic side view of the inscription system of Fig. 1;
Fig. 3 is a flow chart showing the method of operation of the inscription system of Fig. 1;
Fig. 4 is a side view of a gemstone having a smooth girdle mounted on the stage of the inscription system of Fig. 1;
Fig. 5 is a profile of the girdle of Fig. 4 produced by the inscription system of Fig. 1;
Fig. 6 is an example of an indicium for inscribing onto the girdle of the gemstone of Fig. 4;
Fig. 7 is an example of possible locations for the indicium of Fig. 6 on the girdle of the gemstone of Fig. 4;
Fig. 8 is an additional example of an indicium for inscribing onto the girdle of the gemstone of Fig. 4;
Fig. 9 is an example of a possible location for the indicium of Fig. 8 on the girdle of the gemstone of Fig. 4;
Fig. 10 shows how the simple dimensions of the indicium of Fig. 8 cannot be used to find a suitable location for the indicium of Fig. 8 on the girdle of the gemstone of Fig. 4;
Fig. 11 is another example of an indicium for inscribing onto the girdle of the gemstone of Fig. 4;
Fig. 12 shows how the indicium of Fig. 11 cannot be inscribed anywhere on the girdle of gemstone of Fig. 4;
Fig. 13 is an example of a possible location for the indicium of Fig. 11 on the girdle of the gemstone of Fig. 4 assuming that the dimensions of the indicium are reduced;
Fig. 14 is an example of a possible location for the indicium of Fig. 11 on the girdle of the gemstone of Fig. 4 assuming that the indicium is divided;
Fig. 15 is a side view of a gemstone having a faceted girdle mounted on the stage of the inscription system of Fig. 1;
Fig. 16 is a profile of the girdle of Fig. 15 produced by the inscription system of Fig. 1;
Fig. 17 is an example of an indicium for inscribing onto the girdle of the gemstone of Fig. 15;
Fig. 18 is an example of a possible location for the indicium of Fig. 17 on the girdle of the gemstone of Fig. 15 assuming that the dimensions of the indicium are reduced; and
Fig. 19 is an example of a possible location for the indicium of Fig. 17 on the girdle of the gemstone of Fig. 15 assuming that the indicium is divided.

### DESCRIPTION OF THE PREFERRED EMBODIMENTS

The present invention is a system for automatic selection of a location for inscribing an indicium on a girdle of a gemstone and method of operation thereof.

The principles and operation of the gemstone inscription system according to the present invention may be better understood with reference to the drawings and the accompanying description.

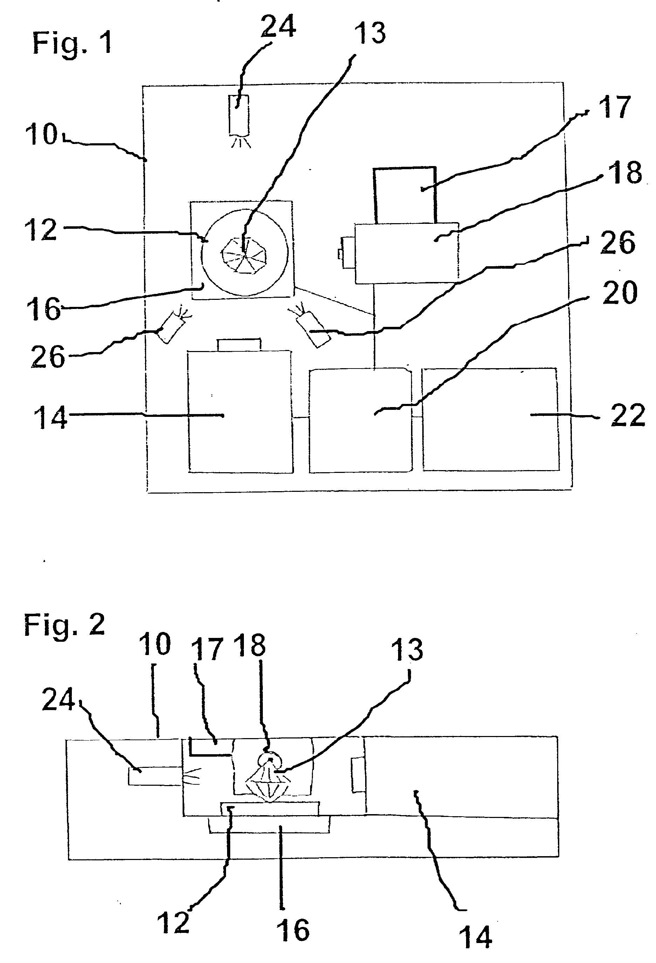

Reference is now made to Fig. 1 and Fig. 2. Fig. 1 is a schematic plan view of an inscription system **10** that is constructed and operable in accordance with a preferred embodiment of the invention. Fig. 2 is a schematic side view of inscription system **10**. Inscription system **10** includes a stage **12**. Stage **12** is configured for mounting a gemstone **13** thereon. Inscription system **10** also includes a light detection apparatus **14** and a drive mechanism **16**. Light detection apparatus **14** typically includes a camera. Drive mechanism **16** is configured to provide relative movement between stage **12** and light detection apparatus **14**. Inscription system **10** also includes an inscription apparatus **18**. Inscription apparatus **18** typically includes a laser. Drive mechanism **16** is also configured to provide relative movement between stage **12** and inscription apparatus **18** by rotating gemstone **13**. Inscription system **10** also includes a drive mechanism **17**. Drive mechanism **17** is configured to provide relative movement between stage **12** and inscription apparatus **18** by rectilinearly moving inscription apparatus **18** up and down. As inscription apparatus **18** has a fixed focus, drive mechanism **17** is also configured to provide relative movement between stage **12** and inscription apparatus **18** by rectilinearly moving inscription apparatus **18** in a horizontal direction toward and away from stage **12**, in order to compensate for the rotation of gemstone **13** during inscription. Inscription system **10** also includes a processor **20** and a display apparatus **22**. Gemstone **13** is typically a diamond. Inscription system **10** also includes a backlight **24**, which is used to create a silhouette of gemstone **13** when a profile of gemstone **13** is being produced. Inscription system **10** also includes a front light arrangement **26**, which is used to view a girdle profile under normal lighting conditions as opposed to viewing silhouettes of the girdle.

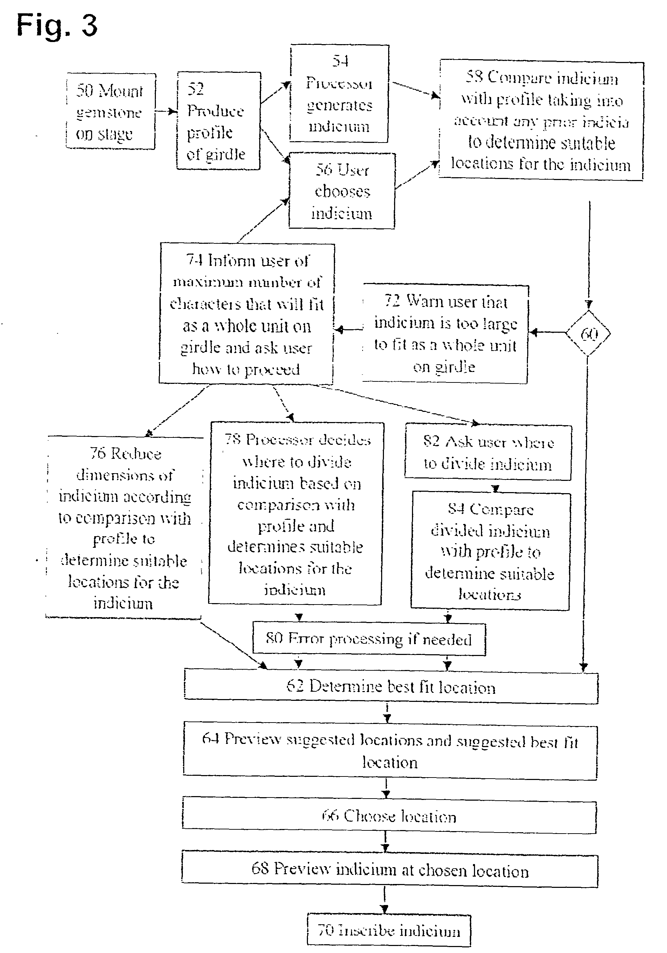

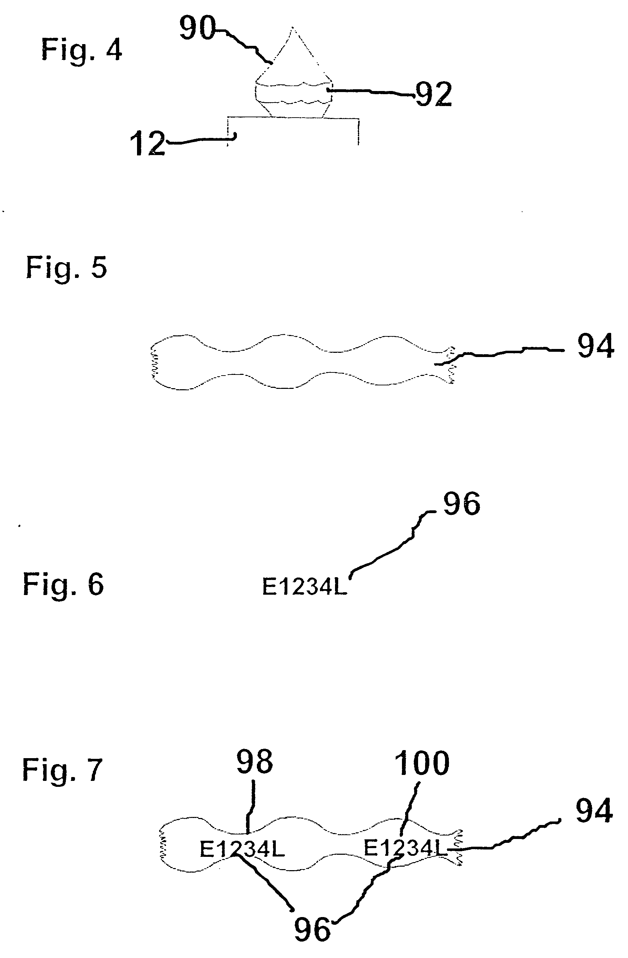

Reference is now made to Fig. 3, which is a flow chart showing the method of operation of inscription system **10**. The method of operation of inscription system **10** includes the following steps. Firstly, a gemstone is mounted on stage **12** (Block **50**). Secondly. drive mechanism **16** is controlled by processor **20** to provide relative movement between stage **12** and light detection apparatus **14**. During this time of relative movement, light detection apparatus **14**, which is controlled by processor **20**, produces a profile of the girdle by performing three dimensional measurements of the gemstone (Block **52**). This second step is known to those skilled in the art and is performed by commercially available systems such as the aforementioned Megascope. Thirdly, a user has the option to enter an indicium to be inscribed via a keypad, which is connected to the processor. The indicium is typically simple text characters, a logo, other design, or a combination thereof. The font and size of the text characters are typically defined by the user (Block **56**). Alternatively, the indicium to be inscribed is generated by processor **20** (Block **54**). Fourthly, processor **20** compares a set of dimensions of the indicium with the profile of the girdle to determine at least one location on the girdle to inscribe the indicium (Block **58**). This step is described in greater detail with respect to Figs. 4 to 19. The fourth step also includes processor **20** determining the locations for inscribing the indicium by avoiding superimposing the new indicium on a prior indicium. This is typically achieved by processor **20** identifying prior indicia on the girdle from the profile of the girdle. The fourth step also includes trying to find locations for the indicium such that the indicium is inscribed on the girdle as a whole unit. The term whole unit means that the indicium does not need to be divided by gaps or among facets of the girdle. If a location is not found such that the indicium is inscribed as a whole unit then the user is warned that the chosen indicium is too large (Block **72**). However. if at least one location is found such that the indicium is inscribed as a whole unit, processor **20** determines a best-fit location on the girdle to inscribe the indicium from the previously found locations (Block **62**). Processor **20** then provides a preview on display apparatus **22** to the user showing the possible inscription locations as well as the suggested best-fit location. The front light arrangement **26** is optionally turned on to enable the user to view the girdle under normal lighting conditions, as opposed to viewing silhouettes of the girdle. Processor **20** rotates the gemstone to enable the user to view the possible inscription locations as well as the suggested best-fit location in its actual size (Block **64**). The user then chooses the desired location for inscribing the indicium (Block **66**). Processor **20** then provides a preview to the user of the indicium, as the indicium is to be inscribed on the girdle (Block **68**). Finally, the indicium is inscribed on the girdle using inscription apparatus **18** (Block **70**). Methods of inscribing indicia on to gemstones using a laser are known to those skilled in the art. Inscription apparatus **18** is controlled by processor **20**. Processor **20** controls drive mechanism **16** and drive mechanism **17** in order to provide relative movement between the gemstone and inscription apparatus **18**. Processor **20** uses the profile data to instruct drive mechanism **17** to control inscription apparatus **18** to ensure that the writing beam of inscription apparatus **18** is always focused on the surface of the gemstone. It should be noted that the degree of resolution of inscription system **10** is typically limited by the degree of resolution of light detection apparatus **14** and inscription apparatus **18**, as well as the accuracy of drive mechanism **16** and drive mechanism **17**.

Reference is now made to Fig. 4, which is a side view of a gemstone **90** having a smooth girdle **92** mounted on stage **12** of inscription system **10**. Gemstone **90** is described as having a smooth girdle **92**, in that girdle **92** does not have facets which break the continuity of girdle **92**. Reference is also made to Fig. 5, which is a profile **94** of girdle **92**, which is produced by inscription system **10**. Reference is also made to Fig. 6, which is an example of an indicium **96** for inscribing onto girdle **92** of gemstone **90**. Reference is additionally made to Fig. 7, which is an example of possible locations **98, 100** for indicium **96** on profile **94**. Both possible locations **98, 100** are suitable for inscribing indicium **96**, as indicium **96** does not have to be divided or reduced in size to fit in possible locations **98, 100**. Inscription system **10** is programmed with the definition of the characteristics of a best-fit location. For example, if a location, which gives the most space above and below an indicium, is defined as a best-fit location, then possible location **100** is considered to be the best-fit location.

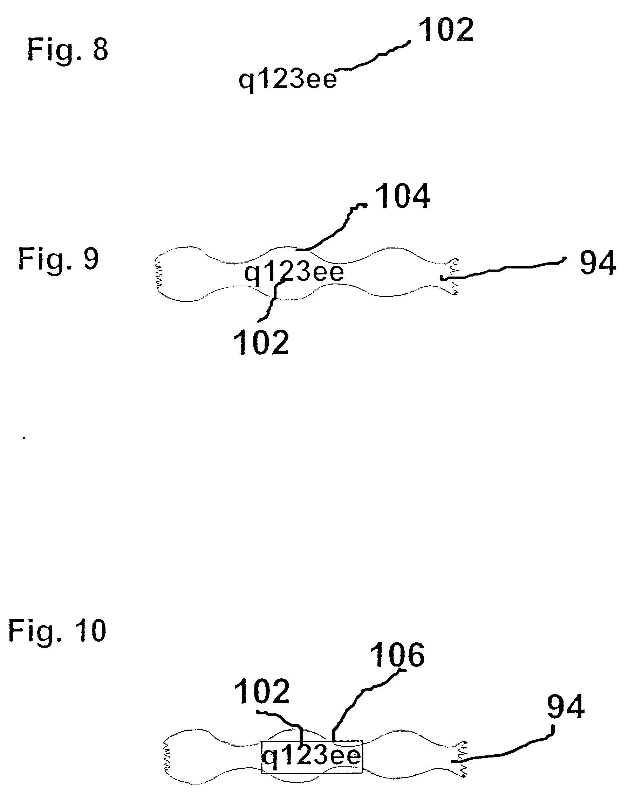

Reference is now made to Fig. 8, which is an additional example of an indicium **102** for inscribing onto girdle **92** (Fig. 4). Reference is also made to Fig. 9, which is an example of a possible location **104** for indicium **102** on profile **94** of girdle **92**. It is seen that possible location **104** is just large enough for indicium **102** to be inscribed thereon. Reference is also made to Fig. 10, which shows how the simple dimensions of indicium **102** cannot be used to find a suitable location for indicium **102** on profile **94** of girdle **92**. Simple dimensions of indicium **102** are typically the maximum length and width of indicium **102**. The simple dimensions of indicium **102** are represented by a box **106** that exactly circumscribes indicium **102**. It is seen that box **106** does not fit anywhere on profile **94**. Therefore, when comparing indicium **102** to profile **94**, the simple dimensions of indicium **102** cannot be used. Instead, a set of dimensions of indicium **102** needs to be compared with profile **94**. The set of dimensions is typically a plurality of length and width measurements for various points on indicium **102** or a pixel map whereby the pixel map of indicium **102** is compared with a pixel map of profile **94**.

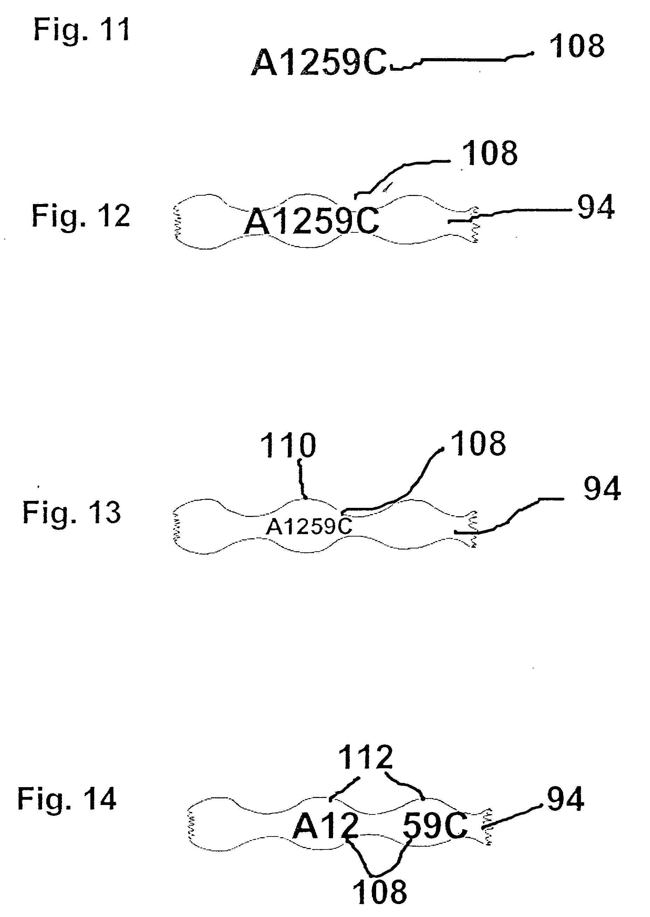

Reference is now made to Fig. 11, which is another example of an indicium **108** for inscribing onto girdle **92**. Reference is also made to Fig. 12, which shows how indicium **108** cannot be inscribed anywhere on profile **94** of girdle **92**. Reference is also made to Fig. 13. which is an example of a possible location **110** for indicium **108** on profile **94** of girdle **92** assuming that the dimensions of indicium **108** are reduced. Reference is also made to Fig. 14, which is an example of a possible location **112** for indicium **108** on profile **94** of girdle **92** assuming that indicium **108** is divided.

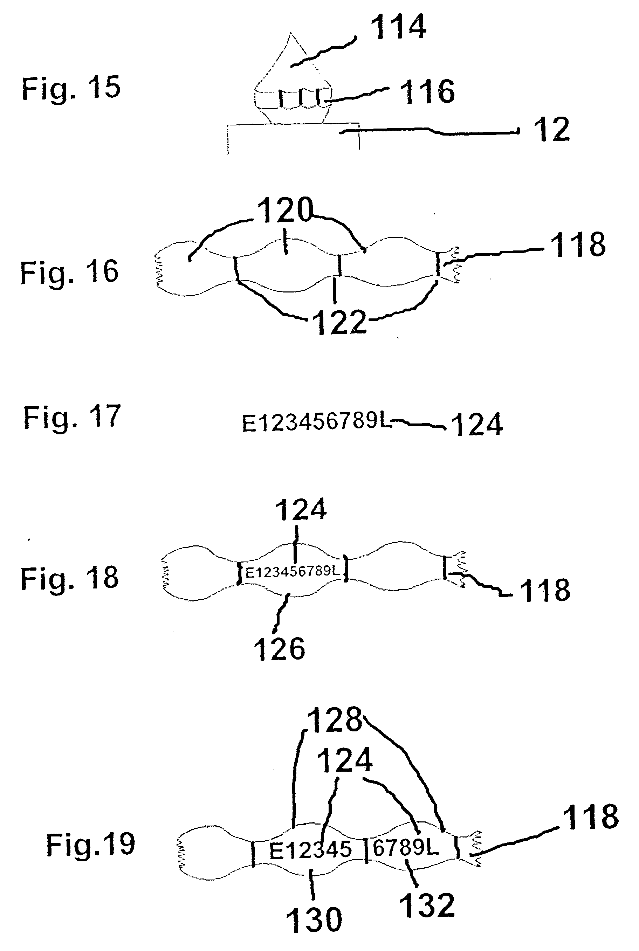

Reference is now made to Fig. 15, which is a side view of a gemstone **114** having a faceted girdle **116** mounted on stage **12** of inscription system **10**. Gemstone **114** is described as having a faceted girdle **116** in that girdle **116** has a plurality of facets, which break up the continuity of girdle **116**. Reference is also made to Fig. 16, which is a profile **118** of girdle **116** produced by inscription system **10**. A plurality of facets **120** and a plurality of facet boundaries **122** are shown on profile **118**. Reference is also made to Fig. 17, which is an example of an indicium **124** for inscribing onto girdle **116**. Reference is now made to Fig. 18, which is an example of a possible location **126** for indicium **124** on profile **118** of girdle **116**, such that indicium **124** is wholly within one facet of girdle **116**, assuming that the dimensions of indicium **124** are reduced. Reference is now made to Fig. 19, which is an example of a possible location **128** for indicium **124** on profile **118** of girdle **116** assuming that indicium **124** is divided between a first facet **130** and a second facet **132**.

Reference is again made to Fig. 3. As described hereinabove, if a location is not found such that the indicium is inscribed as a whole unit then the user is warned by processor **20** that the chosen indicium is too large (Block **72**). In other words, the set of dimensions of the indicium is too large to fit as a whole unit on the girdle. Processor **20** then informs the user of a maximum number of characters that fit onto the girdle as a whole unit for the font size chosen by the user (Block **74**). Processor **20** also asks the user how to proceed (Block **74**). Processor **20** gives the user several options.

Firstly, the user is given an option to reenter a new indicium (Block **56**), which either has a fewer number of characters and/or has a smaller font size.

Secondly, the user is given the option to reduce the size of the indicium such that the indicium fits onto the largest available location on the girdle. If this option is chosen, processor **20** reduces the size of the indicium in order to determine at least one location for inscribing the indicium (Block **76**). After this step, the steps described above with reference to blocks **62, 64, 66, 68, 70** are performed.

Thirdly, the user is given the option, by processor **20**, to divide the indicium within the girdle in order to determine at least one location for inscribing the indicium. For a faceted gemstone, this option typically means dividing the indicium among a plurality of facets of the girdle in order to determine at least one location for inscribing the indicium. The user is also asked to determine a division of the indicium (Block **82**). If this option is chosen, processor **20** compares the set of dimensions of the indicium with the profile to determine at least one location on the girdle to inscribe the indicium (Block **84**). This comparison is performed by processor **20**, such that the number of divisions of the indicium is minimized and the indicium is divided within the girdle according to the division of the indicium determined by the user. For a faceted gemstone, this comparison is performed by processor **20**, such that a number of facets included within a location is minimized and the indicium is divided among facets of the girdle according to the predetermined division of the indicium. If a location is not found on the girdle for the indicium, error processing is performed (Block **80**). During error processing the user is given an option to reenter the indicium (Block **56**) or to reduce the size of the indicium (Block **76**) or to both reduce and divide the indicium. After this step, the steps described above with reference to blocks **62, 64, 66, 68, 70** are performed.

Fourthly, the user is given the option, by processor **20**, to have processor **20** divide the indicium within the girdle in order to determine at least one location for inscribing the indicium. For a faceted gemstone, this option typically means dividing the indicium among a plurality of facets of the girdle in order to determine at least one location for inscribing the indicium. In this option, processor **20** determines a division of the indicium and therefore at least one location for inscribing the indicium, by comparing the set of dimensions of the indicium with the profile. During this comparison, processor **20** tries to divide the indicium at logical points, such as, between words and avoiding dividing logos and pictures. This comparison is also performed by processor **20**, such that the number of divisions of the indicium are minimized or for a faceted gemstone the number of facets included within a location is minimized (Block **78**). If a location is not found on the girdle for the indicium, error processing is performed (Block **80**). During error processing the user is given an option to reenter the indicium (Block **56**) or to reduce the size of the indicium (Block **76**) or to both reduce and divide the indicium. After this step, the steps described above with reference to blocks **62, 64, 66, 68, 70** are performed.

It should be noted that inscription system **10** is configurable to be fully or partially automated. Automation is achieved by removing a combination of the steps described above with reference to blocks **56, 64, 66, 68, 72, 74, 82,** and **84**. For example, if the steps described above with reference to blocks **64** and **66** are omitted, processor **20** inscribes the indicium at the best-fit location computed by processor **20**. For example, if the steps described above with reference to blocks **72** and **74** are omitted and during the step of block **58** a location is not found such that the indicium is inscribed as a whole unit, then processor **20** reduces the indicium (Block **76**) or divides the indicium (Block **78**) automatically. The decision of processor **20** whether to perform reduction (Block **76**) or division (Block **78**) depends on the initial configuration of processor **20** by the system's administrator. If division (Block **78**) is not possible without reduction as well, processor **20** may perform reduction alone (Block **76**) or a combination of reduction and division. The decision of processor **20** whether to perform reduction (Block **76**) or a combination of reduction and division depends on the initial configuration of processor **20** by the svstem's administrator.

It will be appreciated by persons skilled in the art that the present invention is not limited to what has been particularly shown and described hereinabove. In particular, the claims refer to inscribing an indicium on to a girdle of a gemstone. However. it will be apparent to those skilled in the art that the teachings of the present invention can be applied to inscribing an indicium on other surfaces of a gemstone, which include, but are not limited to a table of a gemstone. Rather, the scope of the present invention includes both combinations and sub-combinations of the various features described hereinabove, as well as variations and modifications thereof that are not in the prior art which would occur to persons skilled in the art upon reading the foregoing description.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method of inscribing an indicium on a girdle of a gemstone, comprising the steps of:
(a) producing a profile of the girdle by performing measurements of the gemstone;
(b) determining at least one location on the girdle to inscribe the indicium by comparing the indicium with said profile; and
(c) inscribing the indicium on the girdle at one of said at least one location.

2. The method according to claim 1 further comprising the step of warning a user that the indicium is too large to fit as a whole unit on the girdle.

3. The method according to claim 1, further comprising the step of informing a user of a maximum number of a plurality of characters that fit onto the girdle as a whole unit for a given font size of said characters.

4. The method according to claim 1, wherein said step of determining further includes determining a best-fit location on the girdle to inscribe the indicium.

5. The method according to claim 1, wherein said step of determining further includes reducing a size of the indicium in order to fit the indicium into said at least one location.

6. The method according to claim 5, wherein said step of determining further includes the step of obtaining permission of a user to reduce said size of the indicium in order to determine said at least one location.

7. The method according to claim 1, wherein said at least one location is chosen such that the indicium is a whole unit within said at least one location.

8. The method according to claim 1, wherein said step of determining is effected by comparing the indicium with said profile to determine at least one location on the girdle to inscribe the indicium, wherein said at least one location is chosen such that a number of divisions of the indicium is minimized.

9. The method according to claim 1, wherein said step of determining further includes choosing said at least one location such that the indicium is divided within the girdle.

10. The method according to claim 1 wherein said step of determining is effected so as to avoid superimposing the indicium on a prior indicium

11. The method according to claim 1 further comprising the step of providing a preview to a user of at least one possible inscription location on the girdle.

12. The method according to claim 1, further comprising the step of providing a preview to a user of the indicium as the indicium is to be inscribed on the girdle.

13. The method according to claim 1 wherein said step of inscribing is effected using a laser.

14. A system for inscribing an indicium on to a girdle of a gemstone, comprising:
(a) a stage configured for mounting the gemstone thereon:
(b) a light detection apparatus;
(c) a drive mechanism configured to provide relative movement between said stage and said light detection apparatus;
(d) an inscription apparatus; and
(e) a processor configured to:
(i) operate said light detection apparatus, said stage and said drive mechanism in order to produce a profile of the girdle;
(ii) compare the indicium with said profile to determine at least one location on the girdle to inscribe the indicium; and
(iii) inscribe the indicium on the girdle, using said inscription apparatus.

15. The system according to claim 14 wherein said processor is further configured to warn a user that the indicium is too large to fit as a whole unit on the girdle.

16. The system according to claim 14, wherein said processor is further configured to inform a user of a maximum number of a plurality of characters that fit onto the girdle as a whole unit for a given font size of said characters.

17. The system according to claim 14, wherein said processor is further configured to determine a best-fit location on the girdle to inscribe the indicium.

18. The system according to claim 14, wherein said processor is further configured to reduce a size of the indicium in order to determine said at least one location.

19. The system according to claim 18, wherein said processor is further configured to obtain permission of a user to reduce said size of the indicium in order to determine said at least one location.

20. The system according to claim 14, wherein said at least one location is chosen such that the indicium is a whole unit within said at least one location.

21. The system according to claim 14, wherein said processor is further configured to minimize a number of divisions of the indicium.

22. The system according to claim 14, wherein said processor is further configured to choose said at least one location such that the indicium is divided within the girdle.

23. The system according to claim 14 wherein said processor is further configured to choose said at least one location to avoid superimposing the indicium on a prior indicium.

24. The system according to claim 14, further comprising a display apparatus, wherein said processor is further configured to provide a preview to a user on said display apparatus of at least one possible inscription location on the girdle.

25. The system according to claim 14 further comprising a display apparatus, wherein said processor is further configured to provide a preview to a user on said display apparatus of the indicium as the indicium is to be inscribed on the girdle.

26. The system according to claim 14 wherein said inscription apparatus includes a laser.

27. A method of inscribing an indicium on a girdle of a gemstone, comprising the steps of:
(a) producing a profile of the girdle by performing measurements of the gemstone;
(b) positioning an inscription apparatus relative to the girdle by rotating the gemstone and by moving an inscription apparatus rectilinearly; and
(c) inscribing the indicium on the girdle.

28. A system for inscribing an indicium on to a girdle of a gemstone, comprising:
(a) a stage configured for mounting the gemstone thereon;
(b) a light detection apparatus;
(c) an inscription apparatus;
(d) a first drive mechanism configured to rotate said stage;
(e) a second drive mechanism configured to rectilinearly move said inscription apparatus; and
(f) a processor configured to:
(i) operate said light detection apparatus; said stage and said first drive mechanism in order to produce a profile of the girdle;
(ii) position said inscription apparatus relative to the girdle, by operating said first drive mechanism and said second drive mechanism to rotate said stage and to rectilinearly move said inscription apparatus. respectively: and
(iii) operate said inscription apparatus to inscribe the indicium on the girdle.
